# NEUE EUROPÄISCHE PATENTSCHRIFT

(11) **EP 0 597 893 B2**
(45) Veröffentlichungstag und Bekanntmachung des Hinweises auf die Entscheidung über den Einspruch: **25.08.1999**
(45) Hinweis auf die Patenterteilung: 28.02.1996
(21) Anmeldenummer: 92915540.6
(22) Anmeldetag: 15.07.1992
(51) Int. Cl.: F16D 55/227, F16D 65/092

(54) **SCHWIMMRAHMEN-SCHEIBENBREMSE MIT KOMFORTABLER BREMSBACKENANORDNUNG**
FLOATING CALIPER DISC BRAKE WITH CONVENIENT SHOE ARRANGEMENT
FREIN A DISQUE A ETRIER FLOTTANT A AGENCEMENT CONFORTABLE DES SEGMENTS

(30) Priorität: 08.08.1991 DE 4126197
(43) Veröffentlichungstag der Anmeldung: 25.05.1994
(73) Patentinhaber: Continental Teves AG & Co. oHG, 60488 Frankfurt (DE)
(72) Erfinder: THIEL, Rudolf, D-6000 Frankfurt am Main 90 (DE); KLIMT, Ulrich, D-6114 GrossUmstadt (DE); DÖLL, Andreas, D-6000 Frankfurt am Main 1 (DE)
(86) Internationale Anmeldenummer: EP9201609
(87) Internationale Veröffentlichungsnummer: WO9303289

(56) Entgegenhaltungen:
- EP-A- 0 311 239
- EP-B- 229 618
- CH-B- 461 287
- DE-A- 1 425 279
- DE-A- 1 625 679
- DE-A- 2 804 808
- DE-B- 2 557 439
- DE-B- 2 831 643
- US-A- 3 042 152
- US-A- 3 486 589
- US-A- 4 351 421

## Beschreibung

Die Erfindung betrifft eine Teilbelag-Scheibenbremse für Kraftfahrzeuge, gemäß dem Oberbegriff des Patentanspruchs 1.

Eine derartige Scheibenbremse ist beispielsweise aus der DE-OS 32 32 760 bekannt. Bei dieser Scheibenbremse sind zwei Bremsklötze in einem Schwimmrahmen angeordnet und mittels Haltestifte gegen Herausfallen gesichert. Verbrauchte Bremsklötze können auf einfache Weise gegen neue ausgetauscht werden, indem man lediglich die Haltestifte löst und die Bremsklötze aus der vom Schwimmrahmen umschlossenen Öffnung radial entnimmt. Die beim Bremsen auftretenden Umfangskräfte werden von den Bremsklötzen über in Umfangsrichtung der Bremsscheibe angeordnete Führungsflächen auf den Schwimmrahmen bzw. den Bremsträger übertragen. Dabei werden die Bremsklötze stets an die bremsscheibenauslaufseitigen Führungsflächen angedrückt. Diese Art der Führung und Abstützung der Bremsklötze hat den Nachteil, daß die Erzeugung von Geräuschen, wie z.B. Bremsenquietschen oder Rubbeln, begrünstigt wird. Dies gilt umsomehrbei Schwimmrahmen-Scheibenbremsen, die mit mehr als einem Bremszylinder und mit in Umfangsrichtung der Bremsscheibe gesehen, sehr langen Bremsklötzen/Bremsbakken ausgestattet sind.

Weiterhin sind beispielsweise aus der DE 28 04 808 Schwimmsattel-Teilbelagscheibenbremsen bekannt, bei denen zwei Bremsbacken an einem ortsfesten Bremsträger geführt sind. Die Bremsbacken weisen eine einen Reibbelag tragende Rückenplatte auf, die mit in Umfangsrichtung weisenden, hammerkopfförmigen Vorsprüngen versehen ist. Die Vorsprünge sind am Bremsträger axial verschiebbar geführt und stehen mit diesen derart in Eingriff, daß die beim Bremsen auftretenden Umfangskräfte über beide Vorsprünge, sowohl bremsscheibeneinlaufseitig als auch auslaufseitig, auf den Bremsträger übertragen werden können. Der einlaufseitige Vorsprung wird dabei auf Zug belastet. Scheibenbremsen mit vorwiegend oder ausschließlich an der Bremsscheibeneinlaufseite des Bremsträgers abgestützten, "gezogenen" Bremsbacken haben den Vorteil, daß sie nicht oder zumindest sehr viel weniger zur Erzeugung von Geräuschen neigen. Nachteilig an der aus der DE 28 04 808 bekannten Scheibenbremse ist allerdings, daß die Bremsbacken nicht ohne weiteres radial entnommen werden können. Zum Auswechseln verbrauchter Bremsbacken müssen erhebliche Montagearbeiten durchgeführt werden.

In der DE 28 31 643 C2 wird schließlich eine Schwimmsattel-Teilbelagscheibenbremse beschrieben, die jeweils aus einem Reibbelag und einer dünnen Rückenplatte bestehende Bremsklötze aufweist. Die Bremsklötze sind dabei ihrerseits in Trägerplatten aufgenommen, die an einem fahrzeugfesten Bremsträger axial verschiebbar geführt sind und über die die Bremsumfangkrafteinleitung in den Bremsträger erfolgt. Gleichsam wie bereits beim genannten Stand der Technik ist hier eine gezogene Trägerplattenabstützung am Bremsträger realisiert. Es erweist sich bei einer derartigen Anordnung jedoch ebenfalls als nachteilig, daß zum Bremsklotzwechsel aufwendige Montagetätigkeiten notwendig sind (z. B. Entfernen des die Bremsscheibe und die Bremsklötze radial übergreifenden Bremssattels).

Aufgabe der Erfindung ist es, die Bremsbacken einer gattungsgemäßen Schwimmrahmen-Scheibenbremse bremsscheibeneinlaufseitig abzustützen, ohne auf eine komfortable radiale Entnahmemöglichkeit zu verzichten.

Die Lösung der Aufgabe ergibt sich aus dem kennzeichnenden Teil des Hauptanspruchs. Erfindungsgemäß besteht zumindest die bremskolbenseitige Bremsbacke aus einer Trägerplatte und einem oder mehreren auf der Trägerplatte lösbar befestigten Bremsklötzen. Die Bremsklötze sind aus einer dünnen Rückenplatte und einem Reibbelag aufgebaut. Der Bremsklotz kann dann mit seiner Rückenplatte an der Trägerplatte befestigt werden. Die Rückenplatte kann wesentlich schwächer als die Trägerplatte ausgebildet sein. Dadurch werden Gewicht und Herstellungskosten des Bremsklotzes reduziert. Die Trägerplatte ist an Bremsbackenführungen des Bremsträgers axial verschiebbar geführt, wobei die beim Bremsen auftretenden Umfangskräfte bremsscheibeneinlaufseitig auf den Bremsträger übertragen werden. Daraus ergibt sich der Vorteil einer geringen Neigung zur Geräuscherzeugung. Bei verschlissenen Reibbelägen werden die Bremsklötze von der Trägerplatte gelöst und durch die vom Schwimmrahmen umschlossene Öffnung entnommen. Der dazu erforderliche Montageaufwand ist vorteilhaft gering. Die Trägerplatte muß dabei nicht ausgebaut werden. Sie verbleibt nach einmaliger Montage immer in der Bremse.

Die erfindungsgemäße Bremsbackenanordnung ist also sowohl bezüglich des Geräuschverhaltens als auch im Hinblick auf die Montage der Bremsklötze besonders komfortabel.

Eine einfache und kostengünstige Ausgestaltung der Bremsbackenführung wird im Anspruch 2 offenbart. Die Bolzen können beispielsweise in Bohrungen des Bremsträgers eingepreßt oder eingeschraubt werden. Bei dieser Anordnung kann der Bremsträger gießtechnisch besonders einfach und leicht ausgestaltet werden. Die Trägerplatte wird an ihren Ohren verliersicher an den Bolzen befestigt und geführt. Mit Vorteil wird gemäß Anspruch 3 ein und derselbe Bolzen sowohl zur Führung der Trägerplatte als auch zur Führung des Schwimmrahmens am Bremsträger verwendet. Dabei werden Gewicht und Herstellungskosten eingespart. Durch die im Anspruch 4 beschriebene Maßnahme wird die Befestigung des Bolzens am Bremsträger erleichtert. Eine Trägerplatte mit hülsenförmig ausgeformten Ohren gemäß Anspruch 5 hat aufgrund der vergrößeren Abstützflächen eine höhere Belastbarkeit und Lebensdauer.

Da die Trägerplatte und die Führungsbolzen immer in der Bremse bleiben, werden sie gemäß Anspruch 6 bzw. 7 am besten aus Edelstahl gefertigt, um Korrosionsprobleme zu vermeiden.

Die Klemmbefestigung der Trägerplatte am Bremskolben gemäß Anspruch 8 gewährleistet, daß sie nach der Bremsung von dem sich zurückziehenden Bremskolben mitgenommen und ein Lüftspiel zwischen den Reibbelägen und der Bremsscheibe aktiv eingestellt wird.

In einer Weiterbildung der Erfindung gemäß Anspruch 9 ist ein Bremsklotz an der Trägerplatte lösbar eingerastet. Die Montage des Bremsklotzes kann einfach, schnell und von Hand durchgeführt werden. Dazu wird der Bremsklotz von außen durch die vom Schwimmrahmen umschlossene Öffnung eingeführt, radial gegen eine Feder gedrückt und mittels eines am Bremsklotz befestigten Stiftes am Schwimmrahmen eingerastet. Bevorzugte Ausführungsformen des Stiftes, mit denen der Bremsklotz gleichzeitig klapperfrei an die Trägerplatte angedrückt wird, ergeben sich aus den Ansprüchen 10 bis 12.

Die zur radialen Vorspannung des Bremsklotzes bestimmte Feder wird gemäß Anspruch 13 am besten an der Trägerplatte selbst befestigt. Die Feder folgt dann automatisch der axialen Verschiebung der Trägerplatte, die durch den Verschleiß der Reibbeläge bedingt ist und kann daher gemäß Anspruch 14 und 15 besonders einfach geformt und befestigt sein. Wenn es aber auf eine besonders einfach ausgestaltete Trägerplatte ankommt, wird gemäß Anspruch 16 empfohlen, die Feder am Bremsträger zu befestigen. Bei geeignet geformten Bremsträgern ist eine Ausgestaltung und Befestigung der Feder gemäß Anspruch 17 zweckmäßig, bei der die Feder am Bremsträger einfach eingerastet wird, ohne daß besondere Befestigungsmittel, wie beispielsweise Bohrungen, Nieten oder Schrauben nötig sind. Vorzugsweise wird eine solche Feder gemäß Anspruch 18 aus Stahlblech gestanzt und geformt.

Mit den Ansprüchen 19 bis 21 soll auch ein entsprechend ausgestalteter Bremsklotz zur Verwendung in einer erfindungsgemäßen Scheibenbremse unter Schutz gestellt werden.

Ausführungsbeispiele der Erfindung werden nachfolgend anhand der Zeichnungen näher erläutert.

Es zeigen
- Fig. 1: eine in der Bremsscheibenebene geschnittene Teilansicht einer erfindungsgemäßen Schwimmrahmen-Scheibenbremse in einer ersten Ausführungsform;
- Fig. 2: eine zweite Ausführungsform, sonst wie Fig. 1;
- Fig. 3: einen Schnitt gemäß Linie B-B von Fig. 1,2;
- Fig. 4: einen Schnitt gemäß Linie A-A von Fig. 1,2;
- Fig. 5: ein Detail aus Fig. 4 mit einer anderen Ausführungsform der Trägerplatte;
- Fig. 6: einen Schnitt gemäß Linie C-C von Fig. 1;
- Fig. 7: einen Schnitt gemäß Linie D-D von Fig. 2.

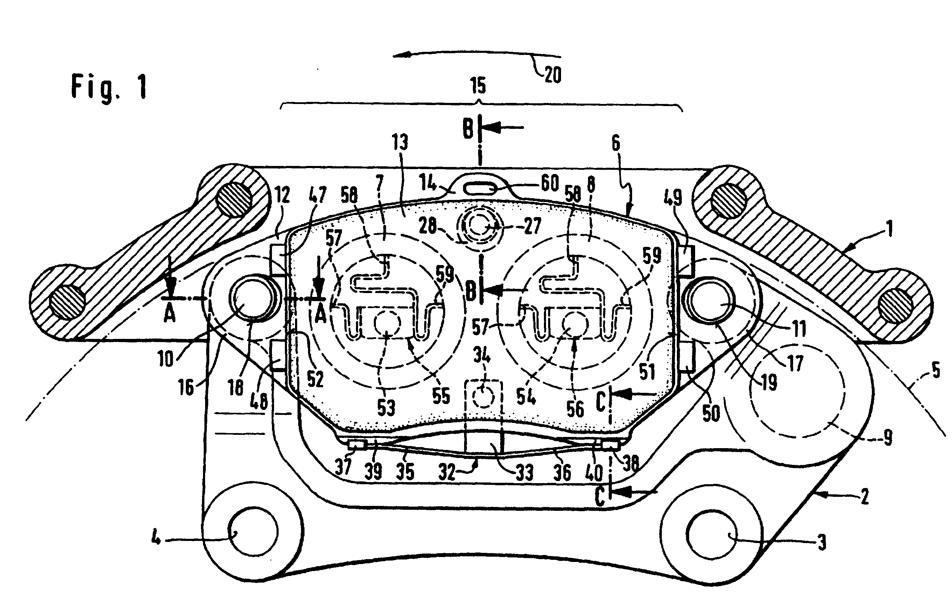

In Fig. 1 ist eine erfindungsgemäße Teilbelagscheibenbremse für Kraftfahrzeuge dargestellt, bei der ein Schwimmrahmen 1 an einem Bremsträger 2 axial verschiebbar geführt ist. Der Bremsträger 2 ist mit zwei Bohrungen 3,4 zum Durchgang von Befestigungsschrauben versehen, mittels derer er am nicht gezeigten Achsschenkel des Fahrzeugs fest verankert wird. Der im Schnitt gezeigte Schwimmsattel 1 erstreckt sich über den äußeren Rand der (durch Strichelung angedeuteten) Bremsscheibe 5 und umschließt die beiderseits der Bremsscheibe 5 angeordneten Bremsbacken 6. Zum Andruck der Bremsbacken 6 an die Bremsscheibe 5 ist der Schwimmrahmen 1 mit einer hydraulischen Betätigungsvorrichtung ausgestattet, die zwei Bremszylinder und zwei hohle Bremskolben 7,8 aufweist, deren offene Seiten an der einen Bremsbacke 6 anliegen. Die andere, nicht gezeigte Bremsbacke ist auf der äußeren Axialseite der Bremsscheibe 5 angeordnet und fest mit dem Schwimmrahmen 1 verbunden. Bei Betätigung der Bremse überträgt der Schwimmrahmen 1 nicht nur die Zuspannkraft auf die Bremsbacken, sondem auch die auftretende Umfangskraft von der axial äußeren Bremsbacke auf den Bremsträger 2. Zur Übertragung der Umfangskraft dient eine Bolzenführung mit einem stark dimensionierten Tragbolzen 9 und einem schwächer dimensionierten Führungsbolzen 10.

Die auf der inneren Axialseite angeordnete Bremsbacke 6 weist eine Trägerplatte 12 und einen auf der Trägerplatte 12 lösbar befestigten Bremsklotz 13,14 auf, der im wesentlichen aus einem Reibbelag 13 und einer Rükkenplatte 14 besteht. Der Bremsklotz 13,14 ist durch eine vom Schwimmrahmen 1 umschlossene Öffnung 15 radial nach außen entnehmbar, während die Trägerplatte 12 nach einmaligem Einbau immer in der Bremse verbleibt. Die Trägerplatte 12 besitzt zwei Ohren 16,17 mit Öffnungen 18,19 zum Durchgang der Bolzen 10,11, an denen die Bremsbacke 6 axial verschiebbar geführt ist. Die Öffnungen 18,19 sind als Langlöcher ausgebildet und der Abstand der Bolzen 10,11 ist so gewählt, daß die beim Bremsen auftretende Umfangs kraft von der Bremsbacke 6 stets über den bremsscheibeneinlaufseitigen Bolzen auf den Bremsträger 2 übertragen wird. Im Falle der Hauptdrehrichtung 20 der Bremsscheibe 5 (Vorwärtsfahrt) nimmt also der Bolzen 11 die. Umfangskraft auf.

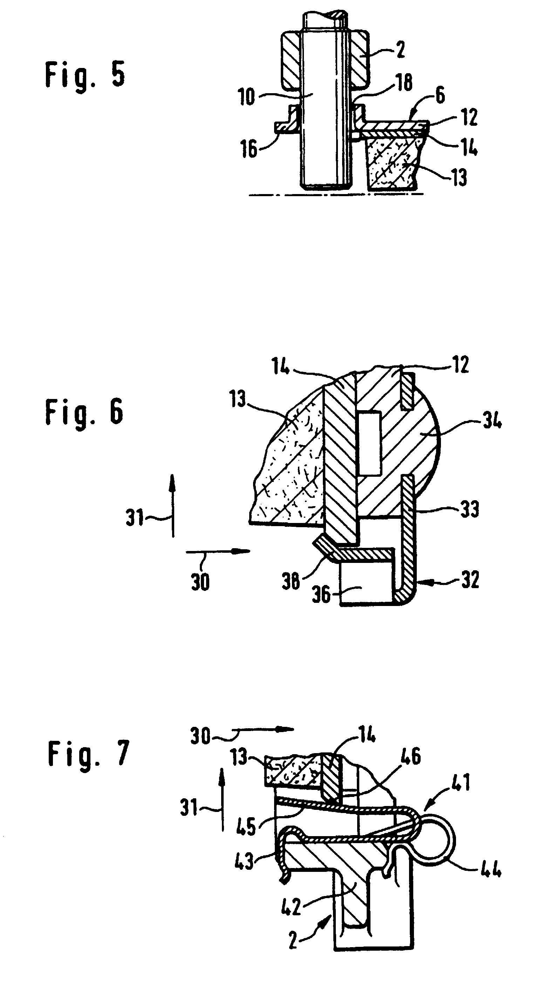

Wie man am besten in Fig. 4 erkennt, ist am Bolzen 10 sowohl der Schwimmrahmen 1 als auch die Bremsbacke 6 verschiebbar geführt. In einer Bohrung 21 des Schwimmrahmens 1 ist ein elastisches Lager 22 angeordnet, welches auf dem einen Führungsabschnitt 23 des Bolzens 10 gleitet. Die Trägerplatte 12 der Bremsbacke 6 gleitet auf dem anderen Führungsabschnitt 24. Der Bolzen 10 ist mit einem mittleren Abschnitt 25 in eine Bohrung 26 des Bremsträgers 2 eingepreßt, so daß die Führungsabschnitte 23,24 zu verschiedenen Axialseiten hin aus dem Bremsträger 2 herausragen. Um das Einpressen des Bolzens 10 bei der Montage der Bremse zu erleichtern, hat der Abschnitt 23 einen kleineren Durchmesser als die Abschnitte 24 und 25.

In einer verbesserten Ausführungsform der Trägerplatte 12 sind, wie in Fig. 5 dargestellt, die Ohren 16,17 rings um die Öffnungen 18,19 hülsenförmig ausgeformt, um die Belastbarkeit der Führungsanordnung zu steigern.

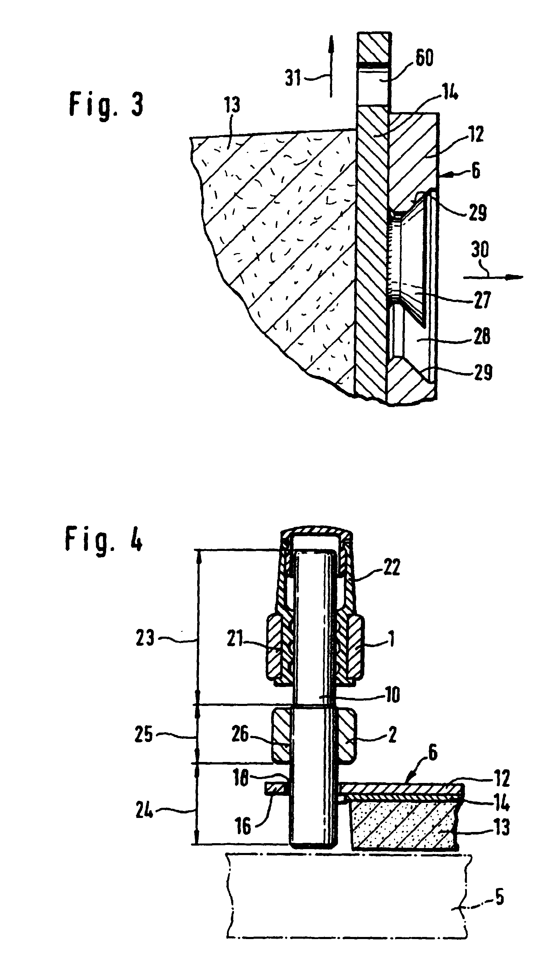

Der Bremsklotz 13,14 ist mit seiner Rückenplatte 14 an der Trägerplatte 12 befestigt. Wie man in Fig. 3 erkennt, ist an die Rückenplatte 14 ein Stift 27 angeschweißt, der zu seinem freien Ende hin konisch verbreitert ist. Die Trägerplatte 12 ist mit einer Stufenbohrung 28 versehen, die eine konische Innenfläche 29 aufweist. Der Stift 27 ragt in die Stufenbohrung 28 hinein und liegt an der Innenfläche 29 an.

Die Rückenplatte 14 ist gegenüber der Trägerplatte 12 in radialer Richtung 31 vorgespannt, so daß der Stift 27 in der Stufenbohrung 28 sicher eingerastet ist. Aufgrund der Formgebung des Stiftes 27 und der Innenfläche 29 wird die Rückenplatte 14 in axialer Richtung 30 gegen die Trägerplatte 12 gedrückt und klapperfrei gehalten.

Zum radialen Vorspannen der Rückenplatte 14 gegenüber der Trägerplatte 12 ist in einem ersten Ausführungsbeispiel eine Blattfeder 32 aus Federstahl vorgesehen, deren Anordnung aus den Fig. 1 und 6 hervorgeht. Die Feder 32 weist einen zentralen Abschnitt 33 auf, der an einem durchgestellten Vorsprung 34 der Trägerplatte 12 durch Taumelnietung befestigt ist. Vom zentralen Abschnitt 33 gehen zwei Federarme 35,36 aus, deren freie Enden 37,38 an den Abschrägungen 39,40 der radialen Schmalseite der Rückenplatte 14 anliegen und diese dabei sowohl in radialer Richtung 31 als auch in axialer Richtung 30 an die Trägerplatte 12 andrücken.

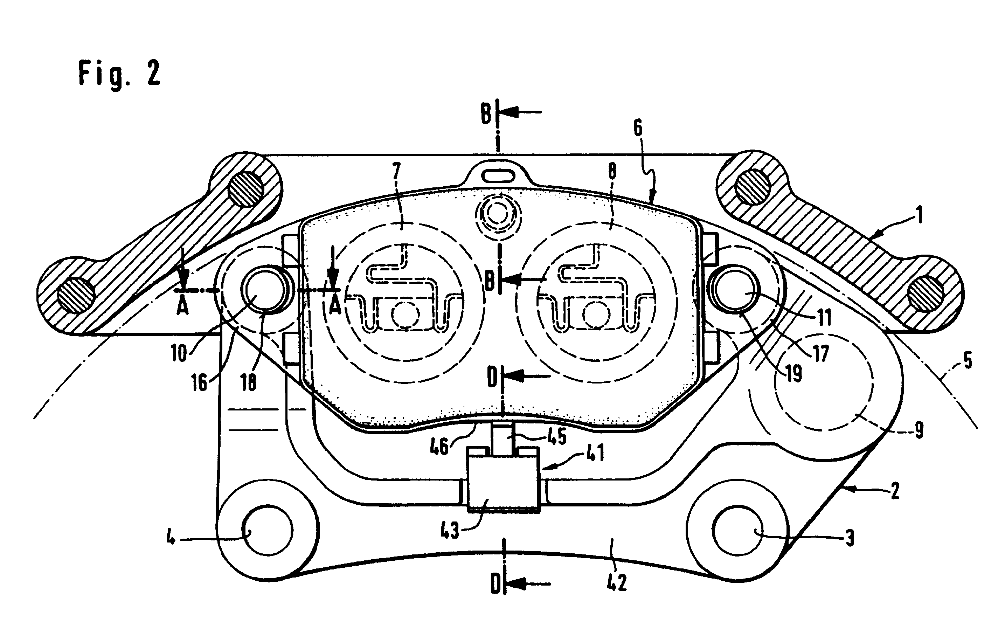

In einem aus den Fig. 2 und 7 hervorgehenden zweiten Ausführungsbeispiel ist eine Blattfeder 41 an einem Verbindungsabschnitt 42 des Bremsträgers 2 befestigt. Die Feder 41 weist Verankerungszungen 43,44 auf, die den Verbindungsabschnitt 42 umgreifen und dort eingerastet sind. Ein Federarm 45 liegt radial federnd an der radialen Schmalseite 46 der Rückenplatte 14 an. Der Federarm 45 hat in axialer Richtung 30 eine solche Länge, daß der Bremsklotz 13,14 mit zunehmendem Verschleiß des Reibbelags 13 am Federarm 45 entlanggleiten kann. Außerdem ist der Federarm 45 gegenüber der Axialrichtung 30 abgewinkelt, um mit einer axialen Kraftkomponente die Rückenplatte 14 an die Trägerplatte 12 anzudrücken.

Zur Aufnahme der Umfangs kraft vom Bremsklotz 13,14 ist die Trägerplatte mit axialen Vorsprüngen 47,48,49,50 versehen, an denen die Schmalseiten 51,52 der Rückenplatte 14 anliegen.

Die Trägerplatte 12 ist bremskolbenseitig mit zwei Durchstellungen 53,54 versehen, an denen zwei Blattfedern 55,56 vernietet sind, die mit jeweils drei Federarmen 57,58,59 in die hohlen Bremskolben 7,8 eingreifen. Die Blattfedern 55,56 bewirken, daß die Bremsbacke 6 nach einer Bremsung von den Bremskolben 7,8 zurückgezogen wird, so daß sich zwischen der Bremsscheibe 5 und dem Reibbelag 13 ein Lüftspiel einstellt. Weiterhin wird die Trägerplatte 12 durch die radiale Kraftkomponente der Federarme 58 klapperfrei an die Führungsbolzen 10,11 angedrückt.

Die Rückenplatte 14 ist mit einer Öse 60 versehen, die zur Erleichterung der Montage des Bremsklotzes 13,14 dient. Wenn der Bremsklotz 13,14 beispielsweise verklemmt ist, kann ein geeignetes Werkzeug an der Öse 60 angreifen, um den Bremsklotz 13,14 aus der Bremse herauszuziehen.

## Patentansprüche

1. Teilbelagscheibenbremse für Kraftfahrzeuge; mit einem am Achsschenkel des Fahrzeugs fest verankerten Bremsträger (2); mit einem Schwimmrahmen (1), der sich über den äußeren Rand einer Bremsscheibe (5) erstreckt und am Bremsträger (2) axial verschiebbar geführt ist; mit einer zum Andruck beiderseits der Bremsscheibe angeordneter Bremsbacken (6) an die Bremsscheibe (5) bestimmten hydraulischen Betätigungsvorrichtung, die auf der axial innenliegenden Seite des Schwimmrahmens (1) angeordnet ist und mindestens einen Bremszylinder und einen Bremskolben (7,8) aufweist; wobei zumindest die auf der inneren Axialseite im Wirkungsbereich der hydraulischen Betätigungsvorrichtung (7,8) angeordnete Bremsbacke (6) eine Trägerplatte (12) und mindestens einen mit einer dünnen Rückenplatte (14) und einem Reibbelag (13) versehenen Bremsklotz (13,14) aufweist, der mit seiner Rükkenplatte (14) auf der Trägerplatte (12) lösbar befestigt ist; mit Bremsbackenführungen (10,11,16,17) am Bremsträger (2), wobei die Trägerplatte (12) axial verschiebbar daran geführt ist und die beim Bremsen auftretende Umfangskraft nur über eine bremsscheibeneinlaufseitige Bremsbackenführung auf den Bremsträger (2) übertragen wird, **dadurch gekennzeichnet**, daß neben den in Umfangsrichtung der Bremsscheibe (5) liegenden Schmalseiten (51,52) des Bremsklotzes (13,14) axiale Vorsprünge (47,48,49,50), vorzugsweise Durchstellungen der Trägerplatte (12) angeordnet sind, die beim Bremsen eine Umfangskraft aufnehmen; daß der Bremsklotz (13,14) durch eine vom Schwimmrahmen (1) umschlossene Öffnung (15) hindurch radial nach außen entnehmbar ist; daß die Rückenplatte (14) eines Bremsklotzes (13,14) mit einem axialen Vorsprung (27) versehen ist, der zu seinem freien Ende hin verbreitert ist; daß die Trägerplatte (12) eine Stufenbohrung (28) oder eine Bohrung mit abgeschrägter Innenfläche (29) aufweist, in die der Vorsprung (27) des Bremsklotzes (13,14) eingreift; und daß der Bremsklotz (13,14) mittels einer Feder (32,41) in radialer Richtung (31) vorgespannt ist, so daß er mit seinem Vorsprung (27) in der Bohrung (28) sicher, aber lösbar einrastet.

2. Teilbelagscheibenbremse nach Anspruch 1, dadurch **gekennzeichnet,** daß die Bremsbackenführung (10,11,16,17) aus zwei am Bremsträger (2) befestigten, axial in Richtung Bremsscheibe (5) hervorstehenden Bolzen (10,11) besteht, die in Umfangsrichtung der Bremsscheibe (5) gesehen beiderseits der Bremsbacke (6) angeordnet sind; und daß die Trägerplatte (12) zwei Ohren (16,17) mit Öffnungen (18,19) zum Durchgang der Bolzen (10,11 ) aufweist.

3. Teilbelagscheibenbremse nach Anspruch 2, dadurch **gekennzeichnet**, daß zumindest an einem Bolzen (10) des Bremsträgers (2) sowohl die Bremsbacke (6) als auch der Schwimmrahmen (1) axial verschiebbar geführt ist.

4. Teilbelagscheibenbremse nach Anspruch 3, **dadurch gekennzeichnet**, daß der zur Führung der Bremsbacke (6) bestimmte Abschnitt (23) des Bolzens (10) einen anderen Durchmesser aufweist als der zur Führung des Schwimmrahmens (1) bestimmte Abschnitt (24), und daß der Bolzen (10) mit einem Teilabschnitt (25) größeren Durchmessers in eine Bohrung (26) des Bremsträgers (2) eingepreßt oder eingeschraubt ist.

5. Teilbelagscheibenbremse nach einem der Ansprüche 2 bis 4,dadurch **gekennzeichnet**, daß die Ohren (16,17) der Trägerplatte (12) rings um ihre Öffnungen (18,19) hülsenförmig ausgeformt sind.

6. Teilbelagscheibenbremse nach einem der Ansprüche 2 bis 5,dadurch **gekennzeichnet**, daß die Bolzen (10,11) der Bremsbackenführung (10,11,16,17) aus Edelstahl bestehen.

7. Teilbelagscheibenbremse nach einem der vorhergehenden Ansprüche, dadurch **gekennzeichnet**, daß die Trägerplatte (12) der Bremsbacke (6) aus Edelstahl besteht.

8. Teilbelagscheibenbremse nach einem der vorhergehenden Ansprüche, dadurch **gekennzeichnet**, daß an der Trägerplatte (12) bremskolbenseitig mindestens eine Blattfeder (55,56) befestigt ist, die mit dem anliegenden Bremskolben (7,8) in Klemmeingriff steht.

9. Teilbelagscheibenbremse nach einem der vorhergehenden Ansprüche dadurch **gekennzeichnet,** daß der Vorsprung des Bremsklotzes (13,14) aus einem Stift (27) besteht, der an der Rückenplatte (14) angeschweißt oder in eine Bohrung der Rückenplatte (14) eingepreßt ist.

10. Teilbelagscheibenbremse nach einem der vorhergehenden Ansprüche dadurch **gekennzeichnet,** daß der Vorsprung des Bremsklotzes (13,14) aus einer Durchstellung besteht, die aus der Rückenplatte (14) herausgeformt ist.

11. Teilbelagscheibenbremse nach einem der Ansprüche 1 bis 10, dadurch **gekennzeichnet,** daß der Vorsprung (27) des Bremsklotzes (13,14) zu seinem freien Ende hin konisch verbreitert ist und daß die Stufenbohrung (28) der Trägerplatte (12) einen konischen Abschnitt (29) aufweist.

12. Teilbelagscheibenbremse nach einem der Ansprüche 1 bis 11, dadurch **gekennzeichnet**, daß an der Trägerplatte (12) zumindest eine Feder (32) befestigt ist, die einen Bremsklotz (13,14) in radialer Richtung (31) verspannt.

13. Teilbelagscheibenbremse nach Anspruch 12, dadurch **gekennzeichnet**, daß die Feder (32) einen zentralen Abschnitt (33) aufweist, von dem ausgehend sich zwei Federarme (35,36) im wesentlichen in Umfangsrichtung der Bremsscheibe (5) erstrecken; daß der zentrale Abschnitt (33) an der Trägerplatte (12) vernietet ist; daß die Federarme ( (35,36) an der radialen Schmalseite (39,40) des Bremsklotzes (13,14) anliegen und diesen sowohl in radialer Richtung (31) nach außen als auch in axialer Richtung (30) gegen die Trägerplatte (12) drücken.

14. Teilbelagscheibenbremse nach Anspruch 12 oder 13, dadurch **gekennzeichnet**, daß die Feder (32) mittels einer Taumelnietung an einem durchgestellten Vorsprung (34) der Trägerplatte (12) befestigt ist.

15. Teilbelagscheibenbremse nach einem der Ansprüche 1 bis 11, dadurch **gekennzeichnet,** daß am Bremsträger (2) zumindest eine Feder (41) befestigt ist, die einen Bremsklotz (13,14) in radialer Richtung (31) vorspannt.

16. Teilbelagscheibenbremse nach Anspruch 15, dadurch **gekennzeichnet**, daß die Feder (41) zumindest zwei Verankerungszungen (43,44) aufweist, die einen Abschnitt (42) des Bremsträgers (2) umgreifen und dort eingerastet sind; daß die Feder (41) zumindest einen Federarm (45) aufweist, der an der radialen Schmalseite (46) des Bremsklotzes (13,14) anliegt und diesen sowohl in radialer Richtung (31) nach außen als auch in axialer Richtung (30) gegen die Trägerplatte (12) drückt.

17. Teilbelagscheibenbremse nach einem der Ansprüche 12 bis 16, dadurch **gekennzeichnet**, daß die Feder (32,41) einstückig aus Stahlblech geformt ist.

18. Bremsklotz zur Verwendung in einer Teilbelagscheibenbremse gemäß einem der vorhergehenden Ansprüche; mit einem Reibbelag (13), der auf einer Rückenplatte (14) befestigt ist, dadurch **gekennzeichnet**, daß die Rückenplatte (14) auf der dem Reibbelag (13) abgekehrten Seite mit einem angeschweißten Stift (27) versehen ist, der einen konischen Abschnitt aufweist, dessen Durchmesser zum freien Ende hin zunimmt, wobei der Stift (27) mit seinem Ende in eine Stufenbohrung (28) einer Trägerplatte (12) einrastbar ist, um den Bremsklotz (13,14) in der Bremse lösbar zu befestigen.

19. Bremsklotz nach Anspruch 18, dadurch **gekennzeichnet**, daß die eine radiale Schmalseite (46) der Rückenplatte (14) zumindest eine Abschrägung (39,40) zur Anlage einer Feder (32,41) aufweist.

20. Bremsklotz nach Anspruch 18 oder 19, dadurch **gekennzeichnet**, daß die andere radiale Schmalseite der Rückenplatte (14) mit einer Öse (60) versehen ist.

## Claims

1. A spot-type disc brake for automotive vehicles including a brake carrier (2) being rigidly anchored to the steering axle of the vehicle, a floating frame (1) which extends beyond the outer edge of a brake disc (5) and is axially slidingly guided at the brake carrier (2), a hydraulic actuating apparatus which is intended to urge the brake shoes (6) positioned on either side of the brake disc against the brake disc (5) and is arranged on the axially internal side of the floating frame (1) and includes at least one brake cylinder and one brake piston (7, 8), wherein at least the brake shoe (6) positioned on the axially internal side in the range of effect of the hydraulic actuating apparatus (7, 8) includes a carrier plate (12) and at least one brake pad (13, 14) having a thin backplate (14) and a friction lining (13), and the brake pad with its backplate (14) is detachably fixed to the carrier plate (12); including brake shoe guides (10, 11, 16, 17) on the brake carrier (2), wherein the carrier plate (12) is axially slidingly guided at the brake carrier and the circumferential force occurring during braking action is transmitted to the brake carrier (2) only through a brake shoe guide positioned on the entering side of the brake disc,
**characterized** in that beside the narrow sides (51, 52) of the brake pads (13, 14) which are positioned in the circumferential direction of the brake disc (5) axial projections (47, 48, 49, 50), preferably buttonhead through projections of the carrier plate (12), are arranged which absorb a circumferential force during braking; in that the brake pad (13, 14) is removable radially outwardly through an opening (15) in the floating frame (1); in that the backplate (14) of a brake pad (13, 14) has an axial projection (27) which is widened in the direction of its free end; in that the carrier plate (12) has a stepped bore (28) or a bore having an inclined internal surface (29) which is engaged by the projection (27) of the brake pad (13, 14); and in that the brake pad (13, 14) is prestressed in a radial direction (31) by means of a spring (32, 41), thereby becoming safely but detachably locked with its projection (27) in the bore (28).

2. A spot-type disc brake as claimed in claim 1,
**characterized** in that the brake shoe guide (10, 11, 16, 17) includes two pins (10, 11) which are fixed to the brake carrier (2), which project axially in the direction of the brake disc (5) and are positioned on either side of the brake shoe (6) as seen in the circumferential direction of the brake disc (5), and in that the carrier plate (12) has two ears (16, 17) and openings (18, 19) for the passage of the pins (10, 11).

3. A spot-type disc brake as claimed in claim 2,
**characterized**in that both the brake shoe (6) and the floating frame (1) are axially slidably guided on at least one pin (10) of the brake carrier (2).

4. A spot-type disc brake as claimed in claim 3,
**characterized** in that the section (23) of the pin (10) which is intended to guide the brake shoe (6) has a diameter other than the section (24) which is intended to guide the floating frame (1), and in that with a large-diameter part section (25) the pin (10) is pressed or screwed into a bore (26) of the brake carrier (2).

5. A spot-type disc brake as claimed in any one of claims 2 to 4,
**characterized** in that the ears (16, 17) of the carrier plate (12) are configured bushing-shaped around their openings (18, 19).

6. A spot-type disc brake as claimed in any one of claims 2 to 5,
**characterized** in that the pins (10, 11) of the brake shoe guide (10, 11, 16, 17) are made of stainless steel.

7. A spot-type disc brake as claimed in any one of the preceding claims,
**characterized** in that the carrier plate (12) of the brake shoe (6) is made of stainless steel.

8. A spot-type disc brake as claimed in any one of the preceding claims,
**characterized** in that on the side of the brake piston at least one leaf spring (55, 56) is fixed to the carrier plate (12) and is in clamping engagement with the abutted brake piston (7, 8).

9. A spot-type disc brake as claimed in any one of the preceding claims,
**characterized** in that the projection of the brake pad (13, 14) consists of a pin (27) which is welded to the backplate (14) or pressed into a bore of the backplate (14).

10. A spot-type disc brake as claimed in any one of the preceding claims,
**characterized** in that the projection of the brake pad (13, 14) consists of a buttonhead through projection which is moulded from the backplate (14).

11. A spot-type disc brake as claimed in any one of the claims 1 to 10,
**characterized** in that the projection (27) of the brake pad (13, 14) is conically widened towards its free end, and in that the stepped bore (28) of the carrier plate (12) has a conical section (29).

12. A spot-type disc brake as claimed in any one of the claims 1 to 11,
**characterized** in that at least one spring (32) is fixed to the carrier plate (12) and prestresses a brake pad (13, 14) in a radial direction (31).

13. A spot-type disc brake as claimed in claim 12,
**characterized** in that the spring (32) has a central section (33) starting from which two spring arms (35, 36) extend substantially in the circumferential direction of the brake disc (5), in that the central section (33) is riveted to the carrier plate (12), in that the spring arms (35, 36) are in abutment against the radially narrow side (39, 40) of the brake pad (13, 14) and urge it both in a radial direction (31) outwardly and in an axial direction (30) against the carrier plate (12).

14. A spot-type disc brake as claimed in claim 12 or 13,
**characterized** in that the spring (32) is fixed by means of wobble riveting to a buttonhead through projection (34) of the carrier plate (12).

15. A spot-type disc brake as claimed in any one of the claims 1 to 11,
**characterized** in that at least one spring (41) is fixed to the brake carrier (2) which prestresses a brake pad (13, 14) in a radial direction (31).

16. A spot-type disc brake as claimed in claim 15,
**characterized** in that the spring (41) has at least two anchor tongues (43, 44) which embrace and lock upon a section (42) of the brake carrier (2), in that the spring (41) has at least one spring arm (45) which abuts on the radially narrow side (46) of the brake pad (13,14) and urges it in a radial direction (31) outwardly and in an axial direction (30) against the carrier plate (12).

17. A spot-type disc brake as claimed in any one of the claims 12 to 16,
**characterized** in that the spring (32, 41) is shaped in one piece from steel sheet.

18. A brake pad for use in a spot-type disc brake as claimed in any one of the preceding claims, including a friction lining (13) fixed to a backplate (14),
**characterized** in that, on its side remote from the friction lining (13), the backplate (14) has a welded pin (27) with a conical section, the diameter of the conical section increasing towards its free end, one end of the pin (27) being lockable into a stepped bore (28) of a carrier plate (12) to detachably fix the brake pad (13, 14) in the brake.

19. A brake pad as claimed in claim 18,
**characterized** in that a radially narrow side (46) of the backplate (14) includes at least one slant (39, 40) for the abutment of a spring (32, 41).

20. A brake pad as claimed in claim 18 or 19,
**characterized** in that the other radially narrow side of the backplate (14) has an ear (60).

## Revendications

1. Frein à disque à garniture partielle pour véhicules automobiles, comprenant un support de frein (2) solidement ancré sur la chape de fusée du véhicule, un cadre flottant (3) s'étendant par dessus le bord extérieur du disque de frein (5) et guidé axialement de façon coulissante sur le support de frein (2), des mâchoires de frein disposées en appui des deux côtés du disque de frein (5), un dispositif hydraulique de commande placé du côté axialement intérieur du cadre flottant (1) et comportant au moins un cylindre de frein et un piston de frein (7, 8), frein dans lequel au moins la mâchoire de frein (6) disposée du côté axialement intérieur comporte, dans la zone d'action du dispositif de commande hydraulique (7, 8), une plaque support (12) et au moins une plaquette de frein (13, 14) munie d'une plaque dorsale mince (14) et d'une garniture de frottement (13), plaquette dont la plaque dorsale (14) est fixée de façon démontable sur la plaque support (12), frein dans lequel la plaque support (12) est guidée de façon axialement coulissante sur le support de frein (2) au moyen de guides (10, 11, 16, 17) des mâchoires de frein, et la force périphérique créée lors du freinage étant transmise au support de frein (2) uniquement par l'intermédiaire d'un guide des mâchoires situé du côté entrant en rotation du disque de frein, caractérisé en ce que prés des faces de chant (51, 52) de la plaquette de frein (13, 14), qui sont orientées dans le sens circonférentiel du disque de frein (5), des saillies axiales (47, 48, 49, 50), de préférence des bossages emboutis de la plaque support (12), sont agencés, ces bossages absorbant lors d'un freinage une force périphérique, en ce que la plaquette de frein (13, 14) peut être retirée radialement vers l'extérieur à travers une ouverture (15) entourée par le cadre flottant (1), en ce que la plaque dorsale (14) d'une plaquette de frein (13, 14) est dotée d'une saillie axiale (27) dont l'extrémité libre est évasée, en ce que la plaque support (12) comporte un alésage étagé (28) ou un alésage à surface intérieure chanfreinée (29) dans lequel s'engage la saillie (27) de la plaquette de frein (13, 14), et en ce que la plaquette de frein (13, 14) est mise sous précontrainte dans le sens radial au moyen d'un ressort (32, 41), de manière telle que sa saillie (27) s'enclenche de façon sûre mais démontable dans l'alésage (28).

2. Frein à disque à garniture partielle selon la revendication 1, caractérisé en ce que le guidage (10, 11, 16, 17) des mâchoires de frein est constitué de deux axes (10, 11) fixés dans le support de frein (2), saillant axialement en direction du disque de frein (5), disposés, dans le sens de la circonférence du disque de frein (5), des deux côtés de la mâchoire de frein (6); et en ce que la plaque de support (12) comporte deux oreilles (16, 17) pourvues d'ouvertures (18, 19) permettant le passage des axes (10, 11).

3. Frein à disque à garniture partielle selon la revendication 2, caractérisé en ce que l'un des axes (10) du support de frein (2) guide à la fois la mâchoire de frein (6) et le cadre flottant (1) de façon axialement coulissante.

4. Frein à disque à garniture partielle selon la revendication 3, caractérisé en ce que la section (23) de l'axe (10), qui est destinée à assurer le guidage de la mâchoire de frein (6), présente un diamètre différent de celui de la section (24) destinée à assurer le guidage du cadre flottant (1), et en ce qu'une section partielle (25) de l'axe (10), présentant un diamètre plus grand, est emmanchée à la presse ou vissée dans un alésage (26) du support de frein (2).

5. Frein à disque à garniture partielle selon l'une des revendications 2 à 4, caractérisé en ce que les oreilles (16, 17) de la plaque de support (12) sont configurées en forme de douille autour de leurs ouvertures (18, 19).

6. Frein à disque à garniture partielle selon l'une des revendications 2 à 5, caractérisé en ce que les axes (10, 11) de guidage (10, 11, 16, 17) des mâchoires de frein sont réalisés en acier inoxydable.

7. Frein à disque à garniture partielle selon l'une des revendications précédentes, caractérisé en ce que la plaque de support (12) de la mâchoire de frein (6) est réalisé en acier inoxydable.

8. Frein à disque à garniture partielle selon l'une des revendications précédentes, caractérisé en ce qu'au moins un ressort lame (55, 56) est fixé sur la plaque de support (12), du côté du piston de frein, qui est en engagement de serrage avec le piston de frein (7, 8) adjacent.

9. Frein à disque à garniture partielle selon l'une quelconque des revendications précédentes, caractérisé en ce que la saillie de la plaquette de frein (13, 14) est constituée d'un rivet (27) soudé sur la plaque dorsale (14) ou emmanché à la presse dans un alésage de la plaque dorsale (14).

10. Frein à disque à garniture partielle selon l'une quelconque des revendications précédentes, caractérisé en ce que la saillie de la plaquette de frein (13, 14) est constituée d'un bossage embouti formé en relief dans la plaque dorsale (14).

11. Frein à disque à garniture partielle selon l'une des revendications 1 à 10, caractérisé en ce que la saillie (27) de la plaquette de frein (13, 14) est évasé en forme conique vers son extrémité libre, et en ce que l'alésage étagé (28) ménagé dans la plaque de support (12) comporte une section conique (29).

12. Frein à disque à garniture partielle selon l'une des revendications 1 à 11, caractérisé en ce qu'au moins un ressort (32) est fixé sur la plaque de support (12), ce ressort mettant sous précontrainte, dans un sens radial (31), une plaquette de frein (13, 14).

13. Frein à disque à garniture partielle selon la revendication 12, caractérisé en ce que le ressort comporte une section centrale (33), à partir de laquelle s'étendent deux branches de ressort (35, 36) suivant essentiellement le sens de la circonférence du disque de frein (5); en ce que la section centrale (33) est rivetée sur la plaque de support (12); en ce que les branches de ressort (35, 36) s'appuient sur la face de chant radiale (39, 40) de la plaquette de frein (13, 14) et la forcent à la fois vers l'extérieur, dans le sens radial (31), et contre la plaque de support (12), dans le sens axial (30).

14. Frein à disque à garniture partielle selon la revendication 12 ou 13, caractérisé en ce que le ressort (32) est fixé au moyen d'un rivetage par fluage radial sur un bossage embouti (34) de la plaque de support (12).

15. Frein à disque à garniture partielle selon l'une des revendications 1 à 11, caractérisé en ce qu'au moins un ressort (41) est fixé sur le support de frein (2), ce ressort mettant une plaquette de frein (13, 14) sous précontrainte dans le sens radial.

16. Frein à disque à garniture partielle selon la revendication 15, caractérisé en ce que le ressort (41) comporte au moins deux branches d'ancrage (43, 44), qui entourent une section (42) du support de frein (2) et s'y enclenchent; en ce que le ressort (41) comporte au moins une branche de ressort (45) qui s'appuie sur la face de chant radiale (46) de la plaquette de frein (13, 14) et la force à la fois vers l'extérieur, dans le sens radial (31), et en appui sur la plaque de support (12), dans le sens axial (30).

17. Frein à disque à garniture partielle selon l'une des revendications 12 à 16, caractérisé en ce que le ressort (32, 41) est formé d'un seul tenant en tôle d'acier.

18. Plaquette de frein destinée à être utilisée dans un frein à disque à garniture partielle selon l'une des revendications précédentes, comprenant une garniture de frottement (13) fixée sur une plaque dorsale (14), caractérisée en ce que la plaque dorsale (14) est pourvue, du côté éloigné de la garniture de frottement (13), d'un rivet soudé (27) comportant une section conique dont le diamètre augmente vers l'extrémité libre, l'extrémité du rivet (27) pouvant être enclenchée dans un alésage étagé (28) ménagé dans une plaque de support (12) de manière à fixer la plaquette de frein (13, 14) de façon démontable dans le frein.

19. Plaquette de frein selon la revendication 18, caractérisée en ce qu'une face de chant radiale (46) de la plaque dorsale (14) comporte au moins un chanfrein (39, 40) servant d'appui pour un ressort (32, 41).

20. Plaquette de frein selon la revendication 18 ou 19, caractérisée en ce que l'autre face de chant radiale de la plaque dorsale (14) est pourvue d'un oeillet (60).
